# FASCICULE DE BREVET EUROPEEN

(11) **EP 2 208 612 B1**
(45) Date de publication et mention de la délivrance du brevet: **22.02.2012**
(21) Numéro de dépôt: 09306132.3
(22) Date de dépôt: 24.11.2009
(51) Int. Cl.: B29D 29/06, B65G 15/08, B65G 15/40

(54) **Presse de vulcansation et procédé de fabrication d'une bande pour convoyeur à bande**
Vulkanisierpresse und Verfahren zur Herstellung eines Förderbandes
Vulcanizing press and process of manufacturing a belt for a conveyor

(30) Priorité: 20.01.2009 FR 0950324
(43) Date de publication de la demande: 21.07.2010
(73) Titulaire: Brunone, René, 27950 Saint Marcel (FR)
(72) Inventeur: Brunone, René, 27950 Saint Marcel (FR)
(74) Mandataire: Jacobson, Claude

(56) Documents cités:
- EP-A- 0 168 339
- EP-A- 0 989 078
- WO-A-2005/123552
- GB-A- 934 021
- JP-A- 63 218 415
- US-A- 2 262 116

## Description

L'invention a pour domaine celui des presses de vulcanisation pour la fabrication de bandes destinées à équiper des convoyeurs à bande, et, plus particulièrement, de bandes tubulaires.

Le document EP 1 776 298 A1 décrit une bande transporteuse pour un convoyeur à bande en forme de tube. Cette bande délimite un espace intérieur clos de section circulaire, particulièrement bien adapté au transport des matières pulvérulentes.

La presse de vulcanisation utilisée pour fabriquer une telle bande tubulaire est une presse plane. Une armature métallique de renfort noyée dans du caoutchouc cru, est disposée sur le plateau fixe plan. Un plateau mobile est abaissé pour presser la bande durant sa cuisson. Après un temps de vulcanisation adapté, un produit plat est extrait de la presse plane.

Le produit plat est ensuite contraint de manière à lui conférer une forme tubulaire : les deux rives opposées de la bande sont relevées et rapprochées l'une à l'autre de manière à refermer la bande sur elle-même.

Pour maintenir cette forme tubulaire, la bande a besoin d'être placée entre des appuis. Ces appuis sont déposés régulièrement le long de la bande à des intervalles rapprochés.

Une presse plane de vulcanisation nécessite d'être équipée de moyens de mise en pression de la bande qui sont extrêmement puissants et, par conséquent, gourmands en énergie. Les presses planes couramment utilisées sont équipées de vérins permettant d'appliquer une pression de 40 bars lors de la cuisson à 160° de la bande.

Le bâti de support d'une telle presse plane doit être dimensionné pour supporter de tels efforts.

De plus, l'installation comportant une presse plane est pénalisée car elle doit également comporter un poste pour conformer la bande au sortir de la presse.

Enfin, la bande doit être placée entre des appuis pour pouvoir être conformée en tube.

Le document US 2262116 - A décrit un dispositif pour la vulcanisation d'une bande courbée qui utilise un moule de vulcanisation aussi courbé.

Le document JP 63218415 - A décrit un dispositif pour la vulcanisation d'une bande tubulaire, dans lequel la bande renforcée en caoutchouc cru est appliquée sur un mandrin cylindrique, un dispositif de pressage est enroulé sur ladite bande, après quoi la bande est vulcanisée.

Le document EP 168339 - B décrit un appareil transporteur comprenant une courroie transporteuse sans fin comprenant des parties marginales pouvant être repliées vers le haut au moyen de rouleaux de support en vue de former une courroie transporteuse complètement renfermée, les parties marginales de la courroie consistant en une paire de pattes séparées longitudinalement et pouvant être pliées autour d'axes longitudinaux de pliage, ces axes ayant été définis dans la courroie au moment de la fabrication.

Le document EP 989078 - A décrit une courroie transporteuse ayant une structure stratifiée comprenant une couche avec des fils orientés selon une certaine angle et une couche avec des fils orientés selon un angle symétrique par rapport à la direction longitudinale de la courroie.

L'invention a donc pour but de pallier aux problèmes précités

Pour cela, l'invention a pour objet une presse de vulcanisation comme définie dans la revendication 1, pour la production d'une bande d'un convoyeur à bande, comportant : un plateau fixe cylindrique comportant extérieurement une première surface s'étendant le long d'un axe principal et ayant des sections transversales circulaires possédant un premier rayon ; un plateau mobile cylindrique comportant intérieurement une seconde surface s'étendant le long dudit axe principal et ayant des sections transversales circulaires possédant un second rayon supérieur au premier rayon, les première et seconde surfaces délimitant une cavité annulaire de réception d'un tronçon de bande ; des moyens de mise en pression permettant de déplacer le plateau mobile pour appliquer une pression prédéterminée sur le tronçon de bande disposé à l'intérieur de la cavité ; et des moyens de chauffage permettant de porter le tronçon de bande disposé à l'intérieur de la cavité à une température prédéterminée, la pression prédéterminée et la température prédéterminée étant adaptées à la vulcanisation du matériau du tronçon de bande pour produire une bande tubulaire.

Suivant des modes particuliers de l'invention, la presse cylindrique comporte une ou plusieurs des caractéristiques suivantes, prise(s) isolément ou suivant toutes les combinaisons techniquement possibles :
- le plateau mobile comporte un feuillard, enroulé sur lui-même pour former un tube entourant la première surface du plateau fixe, le feuillard étant apte à transmettre la pression qui lui est appliquée par les moyens de mise en pression, au tronçon de bande disposé à l'intérieur de la cavité.
- le plateau mobile comporte, en outre, un élément de raccordement disposé de manière à recouvrir les côtés opposés du feuillard, l'élément de raccordement étant apte à transmettre au tronçon de bande disposé à l'intérieur de la cavité, la pression qui lui est appliquée par les moyens de mise en pression.
- l'élément de raccordement est un profilé comportant :
- une face inférieure, conformée en arc de cercle, dont le centre coïncide avec l'axe principal et dont le rayon est égal au second rayon ;
- des faces supérieures droite et gauche inclinées, formant entre elles une arête disposée longitudinalement dans un plan vertical médian P de la presse, et avec la face inférieure des arêtes droite et gauche disposées longitudinalement.
- les moyens de mise en pression comportent une pluralité de chaînes, chaque chaîne étant disposée de manière à entourer le plateau mobile, les extrémités de chaque chaîne étant solidaires de moyens d'actionnement aptes à les rapprocher l'une de l'autre pour tendre la chaîne et appliquer une pression sur le plateau mobile.
- les moyens d'actionnement comportent une pluralité de vérins, une première extrémité d'une chaîne étant reliée à la tige d'un vérin et l'autre extrémité de la même chaîne étant reliée au cylindre du même vérin.
- la liaison entre la tige et une extrémité de la chaîne, ou entre le cylindre et l'autre extrémité de la chaîne, est réalisée par un bras pivotant lié, d'un côté, à la tige ou au cylindre du vérin, et, de l'autre côté, à la chaîne par une griffe apte à être engagée dans un maillon constitutif de l'extrémité de la chaîne.
- le plateau fixe comporte, intérieurement, une chambre apte à recevoir les moyens de chauffage, la paroi extérieure du plateau fixe permettant l'échange de chaleur entre les moyens de chauffage et le tronçon de bande.
- le moyen de chauffage comporte un générateur de courant électrique, des résistances électriques connectées au générateur et circulant à l'intérieur de la chambre, et un fluide calorifique, contenu dans la chambre, apte à transférer la chaleur des résistances à la paroi extérieure du plateau fixe.
- la presse comporte des moyens d'amenée permettant de déplacer la bande tubulaire parallèlement à son axe, qui coïncide avec l'axe principal A, pour produire une bande continue.
- la presse comporte des moyens de refroidissement d'une extrémité aval d'un tronçon de bande contiguë à une extrémité amont d'un tronçon de bande logé dans la cavité.
- les moyens de refroidissement comportent une tubulure en couplage thermique avec une portion amont du plateau fixe et un fluide calorifique circulant dans la tubulure.
- la portion amont du plateau fixe est conique.
- la presse comporte un profilé disposé longitudinalement et permettant, transversalement, de limiter angulairement la cavité.

L'invention porte également sur un procédé comme défini dans la revendication 15, pour l'utilisation de la presse cylindrique présentée ci-dessus pour la production d'une bande d'un convoyeur à bande, comportant les étapes consistantes à :
a)- amener un tronçon de bande en caoutchouc cru à l'intérieur de la cavité ;
b)- actionner les moyens de mise en pression pour appliquer une pression prédéterminée sur ledit tronçon de bande, le plateau mobile étant déplacé en contact du tronçon de bande logé à l'intérieur de la cavité, celui-ci venant en contact de la surface extérieure du plateau fixe ;
c)- chauffer le tronçon de bande à une température prédéterminée grâce aux moyens de chauffage ;
d)- vulcaniser le caoutchouc du tronçon de bande à l'intérieur de la cavité en maintenant ladite pression prédéterminée et ladite température prédéterminée pendant une durée adaptée ; et,
e)- écarter le plateau mobile du plateau fixe pour extraire le tronçon de bande vulcanisé de forme tubulaire.

Suivant des modes particuliers de l'invention, le procédé comporte une ou plusieurs des caractéristiques suivantes, prise(s) isolément ou suivant toutes les combinaisons techniquement possibles :
- le procédé permet la fabrication en continue d'une bande tubulaire pour un convoyeur à bande, en introduisant un premier tronçon de bande en caoutchouc cru dans la presse pour y subir les étapes a) à e) du procédé, puis, après avoir écarté le plateau mobile du plateau fixe, en translatant la bande tubulaire parallèlement à son axe sur une distance prédéterminée de manière à introduire un second tronçon de bande en caoutchouc cru dans la presse pour y subir les étapes a) à e) du procédé, les premier et second tronçons de bande étant des tronçons successifs de la bande tubulaire.
- la presse comportant des moyens de refroidissement de la portion de bande à l'interface entre un tronçon de bande logé dans la cavité de la presse et un tronçon de bande situé à l'extérieur de la cavité de la presse, le procédé comporte l'étape consistant, durant la vulcanisation du tronçon de bande logé dans la cavité, à utiliser les moyens de refroidissement pour éviter le transfert de chaleur du tronçon de bande logé dans la cavité vers le tronçon de bande situé à l'extérieur de la cavité.

Des formes avantageuses de l'invention font l'objet des revendications dépendantes. L'invention et ses avantages seront mieux compris à la lecture de la description qui va suivre, donnée uniquement à titre d'exemple et faite en se référant aux dessins annexés, sur lesquels :
- la figure 1 est une vue en perspective de la presse cylindrique de vulcanisation ;
- la figure 2 est une section axiale de la presse de la figure 1 ;
- la figure 3 est une vue locale de la section axiale de la figure 2, au voisinage de l'extrémité amont de la presse ; et,
- la figure 4 est une vue de côté de l'extrémité amont de la presse.

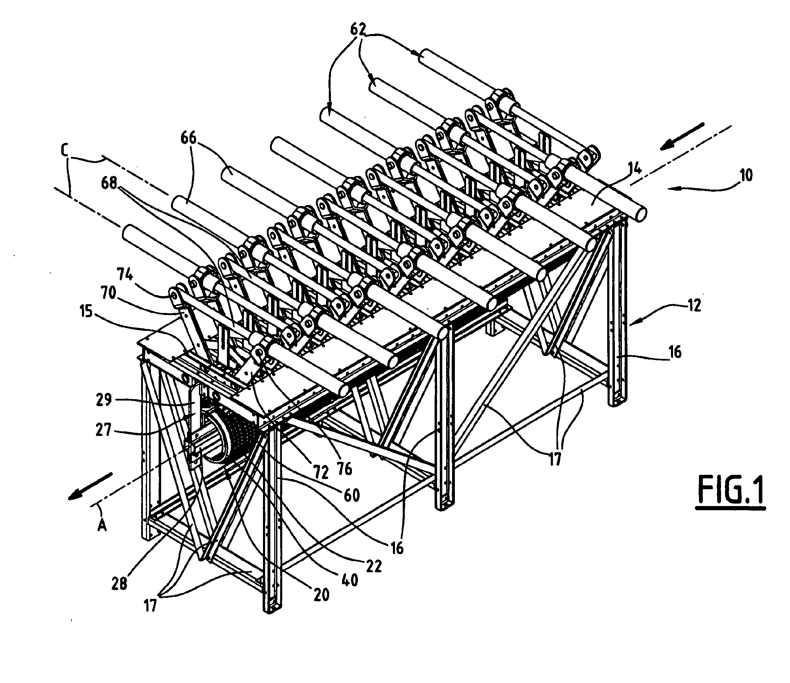

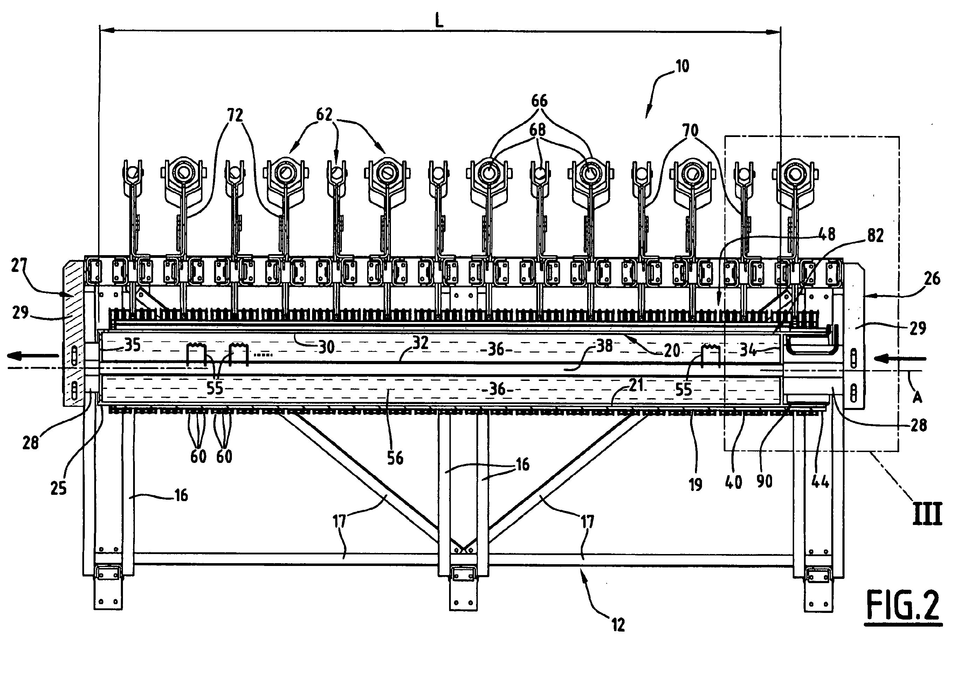

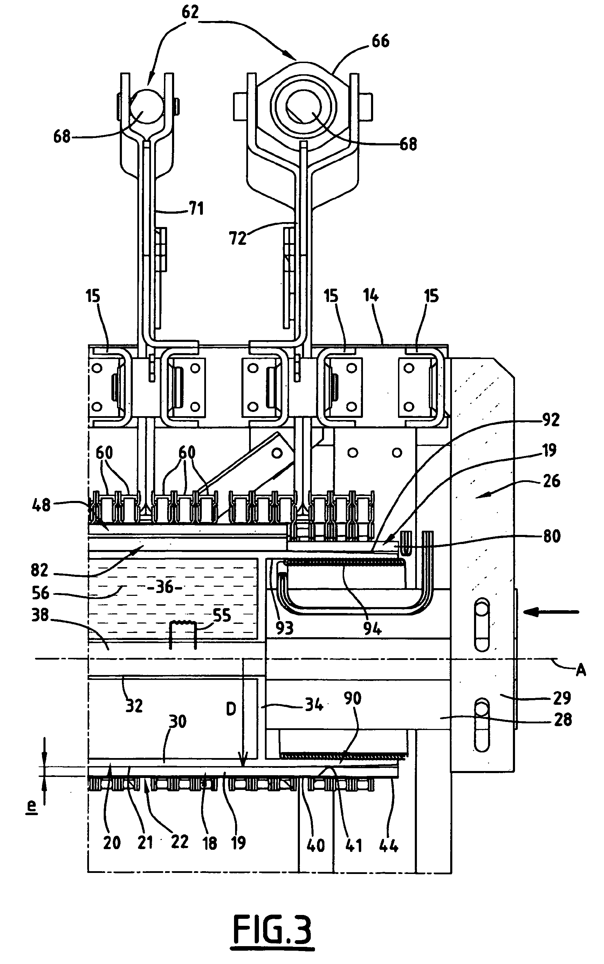

La presse 10 représentée sur les figures 1 à 4 fait partie d'une installation de production d'une bande transporteuse destinée à équiper un convoyeur à bande pour le transport par exemple de minerai. La presse 10 est cylindrique et s'étend le long d'un axe principal A horizontal.

La bande obtenue au moyen de la presse 10 est tubulaire : elle est sensiblement cylindrique lorsqu'elle est au repos, soumise à aucune autre contrainte que celle générée par son propre poids. La bande présente un rayon intérieur D et une épaisseur e, paramètres qui sont sensiblement constants sur toute longueur de la bande. La bande présente une fente selon une de ses génératrices. Les rives de la fente viennent en appui mutuel lorsque la bande est au repos.

La bande tubulaire est en un matériau plastique, du type caoutchouc. Les propriétés mécaniques d'un caoutchouc sont modifiées par un traitement du type vulcanisation. Alors que le caoutchouc cru est mou, le caoutchouc cuit, issu de la vulcanisation, est rigide et élastique, c'est-à-dire qu'il est apte à retrouver sa forme lorsque des contraintes de déformation cessent de lui être appliquées.

En variante, la bande tubulaire comporte une carcasse noyée dans un matériau plastique du type caoutchouc. La carcasse est par exemple un treillis métallique ou une nappe textile. La carcasse permet d'améliorer la résistance à la traction de la bande.

De manière générale, une bande en caoutchouc cru de grande longueur est cuite, tronçon par tronçon, dans la presse 10. Un tronçon de bande est inséré dans la presse 10 de sorte que l'axe du tronçon coïncide avec l'axe principal A. La presse 10 permet de cuire le tronçon de bande engagé dans la presse en lui appliquant une pression et une température adaptées pour vulcaniser le caoutchouc. A l'issue de la cuisson, la presse est ouverte et la bande est déplacée, parallèlement à son axe, de manière à extraire un tronçon de bande tubulaire en caoutchouc cuit, du côté aval de la presse, et d'introduire, simultanément, le tronçon de bande suivant en caoutchouc cru, du côté amont de la presse. Dans tout ce qui suit, les termes amont et aval s'entendent par rapport au sens de déplacement de la bande à travers la presse 10, sens indiqué par les flèches sur les figures.

La presse 10 comporte un bâti 12 métallique ayant un plancher 14, disposé à une certaine hauteur et reposant sur une série de poutres 15. Les poutres 15 sont supportées par des montants verticaux 16, renforcés par des profilés 17 formant des entretoises rigidifiant l'ensemble du bâti 12.

La presse 10 comporte une cavité annulaire 18 délimitée entre un plateau fixe cylindrique 20 et un plateau mobile cylindrique 22, entourant le plateau fixe 20. La cavité 18 est destinée à recevoir un tronçon de bande 19. La presse 10 comporte des moyens de mise en pression permettant d'appliquer une pression prédéterminée sur le tronçon de bande 19, et des moyens de chauffage permettant de porter le tronçon de bande 19 à une température prédéterminée.

Le plateau fixe cylindrique 20 joue le rôle de noyau contre la surface extérieure 21 duquel un tronçon de bande 19 est cuit. La surface extérieure 21 du plateau fixe cylindrique 20 s'étend sur une longueur L, le long de l'axe A. Elle est de section circulaire transversalement à l'axe A et présente un rayon extérieur D, égal au rayon intérieur de la bande à produire.

Le plateau fixe cylindrique 20 comporte une paroi extérieure 30, située radialement vers l'extérieur, une paroi cylindrique intérieure 32, située radialement vers l'intérieur, et des parois d'extrémité amont 34 et aval 35, disposées transversalement à l'axe A. Les cloisons d'extrémité amont 34 et aval 35 sont en forme de couronne et s'étendent radialement depuis la paroi extérieure 30 jusqu'à la paroi intérieure 32. Les parois extérieure 30 et intérieure 32, ainsi que les parois d'extrémité amont 34 et aval 35 délimitent, à l'intérieur du plateau fixe 20, une chambre 36. La paroi cylindrique intérieure 32 délimite intérieurement, un passage tubulaire 38 qui traverse, de part en part, le plateau fixe 20.

Le plateau fixe cylindrique 20 est fixé sur le bâti 12, en dessous du plancher 14. Le plateau fixe 20 est relié, par chacune de ses parois d'extrémité amont 34 et aval 35, aux poutres 15 de support du plancher 14, par l'intermédiaire de potences en « L », respectivement amont 26 et aval 27. Une potence 26, 27, comporte un bras horizontal 28 et un bras vertical 29. Le bras vertical 29 est constitué par un fer plat. De ce fait, lors du déplacement de la bande, les rives de la bande passent de part et d'autre des bras verticaux 29 des potences 26 et 27.

Le plateau mobile cylindrique 22 de la presse 10 comporte un feuillard 40. Le feuillard 40 est une plaque métallique d'épaisseur réduite, par exemple de 0,5 mm, et de forme rectangulaire. Les deux premiers côtés opposés 42 et 43 du feuillard 40 ont une longueur sensiblement égale ou légèrement inférieure à la longueur L du plateau fixe 20. Les deux seconds côtés opposés 44 et 45 du feuillard 40 ont une longueur légèrement inférieure au périmètre extérieur de la bande à produire, c'est-à-dire au périmètre d'un cercle dont le rayon D' est égal à la somme du rayon D et de l'épaisseur e. Le feuillard 40 est enroulé sur lui-même selon sa largeur, de manière à former un tube. Les premiers côtés 42 et 43 du feuillard 40 sont alors rapprochés l'un de l'autre, sans pour autant se toucher. Ils sont distants d'une longueur h positive.

Le feuillard 40 est disposé autour du plateau fixe 20, de sorte qu'une surface intérieure 41 du feuillard 40 soit en vis-à-vis de la surface extérieure 21 du plateau fixe 20. L'espace existant entre les premiers côtés 42 et 43 du feuillard 40 est situé dans un plan vertical médian P de la presse 10, au-dessus du plateau fixe 20.

Pour raccorder les deux premiers côtés 42 et 43 du feuillard 40, de manière à obturer la cavité 18 sur la totalité de sa périphérie, le plateau mobile 22 comporte également un élément de raccordement 48 en forme de chapeau. Celui-ci est disposé de manière à recouvrir les premiers côtés 42 et 43 du feuillard 40. L'élément de raccordement 48 est un profilé s'étendant parallèlement à l'axe A. Il possède une surface inférieure 50, ayant une concavité orientée vers l'axe A, constituant une section de cylindre d'axe A, de rayon D, et d'ouverture angulaire a. La surface intérieure 50 est limitée latéralement par deux génératrices formant les arêtes droite et gauche de l'élément de raccordement 48.

L'élément de raccordement 48 possède également deux faces supérieures planes 52 et 53, orientées à l'écart de l'axe A. Ces faces supérieures 52 et 53 s'étendent entre une arête supérieure de sommet disposée dans le plan vertical médian P de la presse 10 et, respectivement, les arêtes droite ou gauche de jonction avec la surface inférieure 50. L'angle au sommet entre les faces supérieures 52 et 53 est de 180°-a. Ainsi, lorsque l'élément de raccordement 48 est en position, les faces supérieures 52 et 53 rejoignent sensiblement tangentiellement le feuillard 40.

La cavité 18 entre les plateaux fixe 20 et mobile 22 est délimitée par la surface extérieure 21 du plateau fixe 20 et la surface intérieure du plateau mobile 22, celle-ci étant constituée des surfaces intérieures du feuillard 40 et de l'élément de raccordement 48. La cavité 18 est ainsi de forme annulaire. L'épaisseur de la cavité 18 est sensiblement égale à l'épaisseur e de la bande à produire, sachant que le caoutchouc est considéré comme un matériau non-compressible. La cavité 18 s'étend sur la longueur L, par exemple de 12 m.

Lors de l'actionnement des moyens de mise en pression, le rayon D' de la surface intérieure du plateau mobile 22 diminue. Le plateau mobile 22 vient en appui contre le tronçon de bande 19, qui, à son tour, vient en appui contre le plateau fixe 20. Lors de ce mouvement, les premiers côtés 42 et 43 du feuillard 40 se rapprochent mutuellement et la distance h diminue, tout en restant positive. L'élément de raccordement 48, reposant au-dessus du feuillard 40, ferme la cavité 18 à tout instant.

La presse 10 comporte des moyens de chauffage pour porter le tronçon de bande 19 à une température prédéterminée. Ces moyens de chauffage comprennent un générateur de courant électrique (non représenté), un ensemble de résistances chauffantes 55, connectées électriquement au générateur et cheminant à l'intérieur de la chambre 36, et un fluide calorifique 56, tel que de l'huile, remplissant la chambre 36. Le fluide calorifique 56 assure un transfert de chaleur depuis les résistances chauffantes 55 vers la paroi extérieure 30 du plateau fixe 20, en contact thermique de laquelle se trouve le tronçon de bande 19 à cuire. Grâce au fluide calorifique 56, la température de la paroi extérieure 30 du plateau fixe 20 est homogène en tout point de cette paroi, conduisant à une grande qualité de cuisson du tronçon de bande 19 et à une uniformité des ses propriétés mécaniques.

Les moyens de mise en pression de la presse 10 comportent une pluralité de chaînes 60 couplées à une pluralité de vérins 62. Chaque chaîne 60, constituée de maillons 64, est disposée dans un plan vertical transversal à l'axe A, et entoure extérieurement une section transversale circulaire du feuillard 40. Les chaînes 60 sont regroupées par groupe de trois chaînes, et deux groupes de chaînes sont associés à un même vérin 62.

Chaque vérin 62 s'étend selon un axe C, disposé horizontalement dans un plan transversal à l'axe A, au-dessus du plancher 14 du bâti 12. Chaque vérin 62 comporte un cylindre 66 et une tige 68. Chaque tige 68 est apte à coulisser le long de l'axe C. Les vérins 62 sont disposés parallèlement les uns par rapport aux autres, alternativement orientés dans un sens puis dans l'autre, et placés alternativement de part et d'autre du plan vertical médian P de la presse 10.

Chaque vérin 62 est couplé à des premier et second bras pivotant 70 et 72. Ils sont montés, de part et d'autre du plan vertical médian P, sur une poutre 15 de support du plancher 14. Ils sont aptes à pivoter autour de premier et second axes parallèles à l'axe A, de part et d'autre du plan vertical médian P.

L'extrémité supérieure 74 du premier bras 70 est fixée, par une liaison pivot, à l'extrémité distale de la tige 68 du vérin 62, tandis que l'extrémité inférieure 75 du premier bras 70 est couplée à des premières extrémités respectives des six chaînes 60 associées au vérin. L'extrémité supérieure 76 du second bras 72 est couplée, par une liaison pivot, au cylindre 66 du vérin 62 et l'extrémité inférieure 77 du second bras 70 est couplée aux autres extrémités des mêmes chaînes 60.

Le couplage entre l'extrémité inférieure 75, 77, d'un des bras pivotant 70, 72, et l'extrémité d'un chaîne 60 est réalisé par une griffe 78, solidaire de l'extrémité inférieure 75, 77, du bras pivotant considéré et recourbée vers le haut. Cette griffe 78 est engagée dans un des maillons d'extrémité de la chaîne 60 couplée au bras pivotant considéré.

Lors de l'actionnement du vérin 62, la tige 68 se déplace hors du cylindre 66, selon la direction horizontale C. Alors que les extrémités supérieures 76 et 77 des premier et second bras pivotant 70 et 72 s'éloignent l'une de l'autre, les extrémités inférieures 75 et 77 des premier et second bras pivotant 70 et 72 se rapprochent l'une de l'autre. De ce fait, les chaînes 60 des deux groupes de chaînes couplées au même vérin 62 se tendent autour du plateau mobile 22 de la presse 10. Les chaînes 60 appliquent une force de pression sur le feuillard 40. Le contrôle du mouvement de la tige 68 du vérin 62 permet de réguler la pression exercée par la presse 10 sur le tronçon de bande 19 inséré dans la cavité 18. L'utilisation d'un feuillard 40 permet de répartir la pression exercée par les différentes chaînes 60 sur le tronçon de bande 19. Ceci influence positivement la qualité et l'homogénéité du produit final vulcanisé.

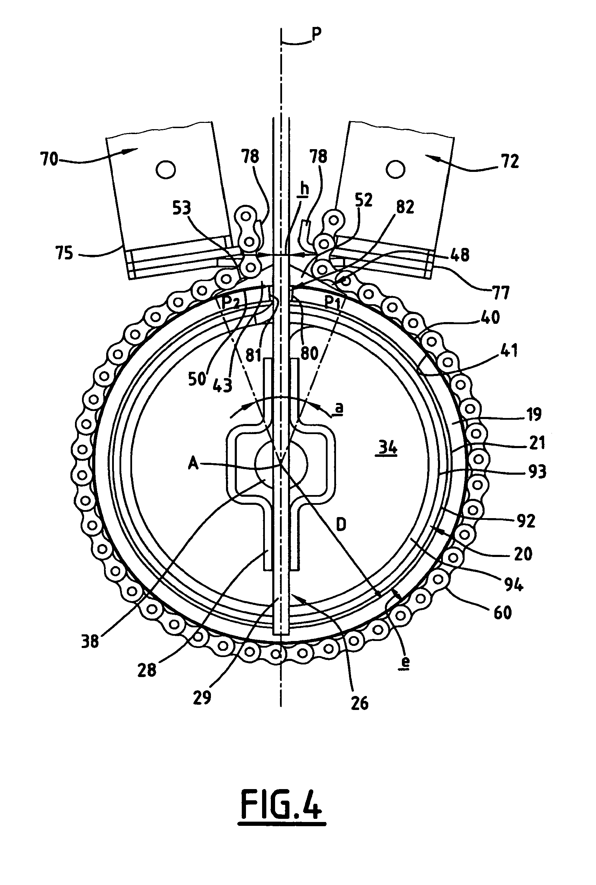

En se référant plus particulièrement à la figure 4, on notera que les portions d'extrémité d'une chaîne 60 quittent tangentiellement le feuillard 40 au voisinage des points indiquées par les références P1 et P2. Les dimensions de l'élément de raccordement 48 sont adaptées pour que les portions d'extrémité de la chaîne 60 viennent en contact des faces supérieures 52 et 53 de l'élément de raccordement 48. En conséquence, les portions d'extrémité de la chaîne 60 appliquent des forces de pression sur l'élément de raccordement 48. Celui-ci répartit et retransmet ces forces de pression au tronçon de bande 19 et plus particulièrement à la section du tronçon de bande 19 située dans la partie supérieure de la cavité 18. Ainsi, le tronçon de bande 19 logé à l'intérieur de la presse 10 est mis en pression sur l'ensemble de son volume.

Pour que la bande produite présente des rives 80 et 81 nettes, aptes à venir en appui mutuel, la presse 10 comporte un profilé 82 de section sensiblement carrée. Le profilé 82 est disposé dans le plan vertical médian P de la presse 10, à la fois au-dessus de la génératrice constituant l'apex du plateau fixe cylindrique 20, et au-dessous de la surface inférieure 50 de l'élément de raccordement 48. Le profilé 82 limite angulairement la cavité 18 à une portion d'anneau. Les rives 80 et 81 du tronçon de bande 19 placé dans la cavité 18 viennent en contact et sont pressées contre le profilé 82 au cours de l'actionnement de la presse 10.

Avantageusement, la largeur du profilé 82 est sensiblement égale à l'épaisseur du fer plat constituant le bras vertical 29 des potences 26 et 27 de support du plateau fixe 20. Ainsi, lors de l'avancée de la bande, au passage du fer plat, les rives 80 et 81 de la bande sont écartées l'une de l'autre, d'une distance correspondant à la largeur du profilé 82. L'insertion d'un tronçon de bande dans la presse 10 est ainsi facilitée.

Eventuellement, il est possible de munir les chants des rives 80 et 81 de la bande respectivement d'un motif et d'un motif conjugué, aptes à coopérer pour fermer plus complètement et plus sûrement la fente de la bande. Dans ce but, les faces du profilé 82, contre lesquelles les rives 80 et 81 de la bande sont pressées, portent des reliefs ayant des formes complémentaires des motifs que l'on souhaite conférer aux rives 80 et 81 de la bande.

La paroi extérieure 30 du plateau fixe 20 se prolonge axialement au-delà de la paroi d'extrémité amont 34. Cette portion amont 90 de la paroi extérieure 30 comporte une surface extérieure 92 conique : le rayon de la surface extérieure de la portion amont 90 diminue lorsque l'on s'éloigne de la paroi d'extrémité amont 34 le long de l'axe A. Cette géométrie facilite l'insertion d'un tronçon de la bande à l'intérieur de la cavité 18.

La portion amont 90 comporte, intérieurement, des moyens de refroidissement. Dans le mode de réalisation actuellement préféré décrit sur les figures, le moyen de refroidissement comporte une tubulure 94 enroulée sur elle-même de manière à former une spirale sur une surface intérieure 93 de la portion amont 90 du plateau fixe 20. Un liquide calorifique mis en circulation dans la tubulure 94 au moyen d'une pompe, non représentée, passe à travers un échangeur de chaleur, également non représenté. Ainsi, le côté aval d'un tronçon de bande suivant, attenant au tronçon de bande 19 engagé dans la presse et chauffé, est maintenu à une température basse. On contrôle complètement le processus de vulcanisation du caoutchouc de la bande en créant une frontière nette entre un tronçon cuit et un tronçon qui ne l'est pas. En évitant le transfert de chaleur d'un tronçon à l'autre, le tronçon de bande en attente n'est pas altérée et ne subit pas de modification non-controlée de ses propriétés mécaniques.

La frontière permet de connaître la distance précise dont il faut translater la bande à travers la presse 10 pour cuire le tronçon suivant de la bande. En effet, il ne faut pas produire un déplacement excessif de la bande qui conduirait à l'existence d'une zone de caoutchouc cru entre deux tronçons en caoutchouc cuit. On préfère translater la bande sur une distance inférieure à la longueur de la presse pour ménager une zone de recouvrement entre deux tronçons successifs d'environ 15 cm de long qui subira deux fois le procédé de vulcanisation. Une portion de caoutchouc déjà cuite peut subir à nouveau le procédé de vulcanisation sans que ses propriétés en soient altérées.

De manière additionnelle, les moyens de refroidissement de la portion amont 90 du plateau fixe 20 et le fait que cette portion amont 90 a une forme extérieure tronconique évitent la formation de bourrelets annulaires de matière sur le tronçon de bande en attente.

L'utilisation de la presse qui vient d'être décrite est la suivante.

La bande en caoutchouc cru est amenée en amont de la presse 10 par des moyens d'amenée adaptés. La presse 10 selon l'invention permet de produire continûment une bande tubulaire de grande longueur.

Un tronçon de la bande en caoutchouc cru est introduit dans la presse coaxialement à l'axe principal A de cette dernière. Il y subit une cuisson, sous pression et à température élevée, durant un temps de cuisson adapté de manière à réaliser la vulcanisation du caoutchouc. Par exemple, le tronçon de bande est maintenu 15 mn à 40 bars et à une température entre 130 et 160°C environ, de préférence 145°C.

En aval de la presse 10, la bande tubulaire fabriquée est enroulée autour d'un mandrin. Elle est enroulée à plat. Lorsqu'elle sera déroulée, elle reprendra sa forme tubulaire par défaut.

Pour atteindre la pression souhaitée, des vérins de 8 T suffisent. Sur les figures, le plateau fixe mesure 3 m de long et la presse comporte quatorze vérins. Les forces de pression étant exercées concentriquement à l'axe A, elles s'annulent mutuellement. De ce fait, le bâti n'a pas besoin d'être dimensionné pour pouvoir résister à des efforts importants. Les efforts que doit reprendre le bâti sont en fait de plus d'un ordre de grandeur au-dessous, c'est-à-dire dix fois moins élevés, que les efforts que doit reprendre le bâti d'une presse plane selon l'art antérieur.

Alors que la production d'une bande comportant uniquement du caoutchouc a été décrite, en variante, la bande comporte un treillis métallique de renfort, noyé dans le caoutchouc et recouvrant tout ou partie de la section circulaire de la bande.

## Revendications

1. Presse de vulcanisation (10) pour la production d'une bande d'un convoyeur à bande, **caractérisée en ce qu'**elle comporte :
- un plateau fixe cylindrique (20) comportant extérieurement une première surface (2) s'étendant le long d'un axe principal A et ayant des sections transversales circulaires possédant un premier rayon (D) ;
- un plateau mobile cylindrique (22) comportant intérieurement une seconde surface (41) s'étendant le long dudit axe principal et ayant des sections transversales circulaires possédant un second rayon (D') supérieur audit premier rayon, les première et seconde surfaces délimitant une cavité (18) annulaire de réception d'un tronçon de bande (19) ;
- des moyens de mise en pression (60, 62) permettant de déplacer ledit plateau mobile pour appliquer une pression prédéterminée sur le tronçon de bande disposé à l'intérieur de la cavité ; et,
- des moyens de chauffage (55, 56) permettant de porter le tronçon de bande disposé à l'intérieur de la cavité à une température prédéterminée, ladite pression prédéterminée et ladite température prédéterminée étant adaptées à la vulcanisation du matériau dudit tronçon de bande pour produire une bande tubulaire.

2. Presse selon la revendication 1, **caractérisée en ce que** le plateau mobile (22) comporte un feuillard (40), enroulé sur lui-même pour former un tube entourant la première surface (21) dudit plateau fixe (20), ledit feuillard étant apte à transmettre la pression qui lui est appliquée par les moyens de mise en pression (60, 62), au tronçon de bande (19) disposé à l'intérieur de la cavité (18).

3. Presse selon la revendication 2, **caractérisée en ce que** le plateau mobile (22) comporte, en outre, un élément de raccordement (48) disposé de manière à recouvrir les côtés opposés (42, 43) dudit feuillard (40), ledit élément de raccordement étant apte à transmettre au tronçon de bande (19) disposé à l'intérieur de !a cavité (18), la pression qui lui est appliquée par les moyens de mise en pression (60, 62).

4. Presse selon la revendication 3, **caractérisé en ce que** ledit élément de raccordement (48) est un profilé comportant :
- une face inférieure (50), conformée en arc de cercle, dont le centre coïncide avec l'axe principal (A) et dont le rayon est égal audit second rayon (D') ;
- des faces supérieures droite (52) et gauche (53) inclinées, formant entre elles une arête disposée longitudinalement dans un plan vertical médian (P) de la presse 10, et avec la face inférieure (50) des arêtes droite et gauche disposées longitudinalement.

5. Presse selon l'une quelconque des revendications précédentes, **caractérisée en ce que** les moyens de mise en pression comportent une pluralité de chaînes (60), chaque chaîne étant disposée de manière à entourer le plateau mobile (22), les extrémités de chaque chaîne étant solidaires de moyens d'actionnement (62, 70, 72) aptes à les rapprocher l'une de l'autre pour tendre ladite chaîne et appliquer une pression sur ledit plateau mobile.

6. Presse selon la revendication 5, **caractérisée en ce que** lesdits moyens d'actionnement comportent une pluralité de vérins (62), une première extrémité d'une chaîne (60) étant reliée à la tige (68) d'un vérin et l'autre extrémité de la même chaîne (60) étant reliée au cylindre (66) du même vérin.

7. Presse selon la revendication 6, **caractérisée en ce que** la liaison entre la tige (68) et une extrémité de la chaîne (60), ou entre le cylindre (66) et l'autre extrémité de la chaîne (60), est réalisée par un bras pivotant (70, 72) lié, d'un côté, à la tige ou au cylindre du vérin, et, de l'autre côté, à la chaîne par une griffe apte à être engagée dans un maison constitutif de l'extrémité de la chaîne.

8. Presse selon l'une quelconque des revendications précédentes, **caractérisée en ce que** ledit plateau fixe (20) comporte, intérieurement, une chambre (36) apte à recevoir lesdits moyens de chauffage (55, 56), la paroi extérieure (30) du plateau fixe permettant l'échange de chaleur entre les moyens de chauffage et le tronçon de bande (19).

9. Presse selon la revendication 8, **caractérisée en ce que** ledit moyen de chauffage comporte un générateur de courant électrique, des résistances électriques (55) connectées audit générateur et circulant à l'intérieur de la chambre (36), et un fluide calorifique (56), contenu dans ladite chambre, apte à transférer la chaleur des résistances à la paroi extérieure (30) du plateau fixe (20).

10. Presse selon l'une quelconque des revendications précédentes, **caractérisée en ce que**lle comporte des moyens d'amenée permettant de déplacer
la bande tubulaire parallèlement à son axe qui coïncide avec ledit axe principal (A) pour produire une bande continue.

11. Presse selon la revendication 10, **caractérisée en ce qu'**elle comporte des moyens de refroidissement (94) d'une extrémité aval d'un tronçon de bande contiguë à une extrémité amont d'un tronçon de bande logé dans la cavité.

12. Presse selon la revendication 11, **caractérisée en ce que** les moyens de refroidissement comportent une tubulure (94) en couplage thermique avec une portion amont (90) du plateau fixe (20) et un fluide calorifique circulant dans ladite tubulure.

13. Presse selon la revendication 11 ou la revendication 12, **caractérisée en ce que** la portion amont (90) du plateau fixe (20) est conique.

14. Presse selon l'une quelconque des revendications précédentes, **caractérisée en ce qu'**elle comporte un profilé (82) disposé longitudinalement et permettant, transversalement, de limiter angulairement la cavité (18).

15. Procédé d'utilisation d'une presse de vulcanisation pour la production d'une bande d'un convoyeur à bande, **caractérisé en ce que**, la presse étant une presse (10) selon l'une quelconque des revendications 1 à 14, le procédé comporte les étapes consistantes à :
a)- amener un tronçon de bande (19) en caoutchouc cru à l'intérieur de la cavité (18) ;
b)- actionner les moyens de mise en pression (60, 62) pour appliquer une pression prédéterminée sur ledit tronçon de bande, le plateau mobile (22) étant déplacé en contact du tronçon de bande (19) logé à l'intérieur de la cavité, celui-ci venant en contact de la surface extérieure (30) du plateau fixe (20) ;
c)- chauffer le tronçon de bande à une température prédéterminée grâce aux moyens de chauffage (55, 56) ;
d)- vulcaniser le caoutchouc du tronçon de bande à l'intérieur de la cavité en maintenant ladite pression prédéterminée et ladite température prédéterminée pendant une durée adaptée ; et,
e)- écarter le plateau mobile (22) du plateau fixe (20) pour extraire le tronçon de bande vulcanisé de forme tubulaire.

16. Procédé selon la revendication 15, **caractérisé en ce qu'**il permet la fabrication en continue d'une bande tubulaire pour un convoyeur à bande, en
introduisant un premier tronçon de bande en caoutchouc cru dans la presse pour y subir les étapes a) à e) du procédé, puis, après avoir écarté le plateau mobile (22) du plateau fixe (20), en translatant la bande tubulaire parallèlement à son axe d'une longueur prédéterminée de manière à introduire un second tronçon de bande en caoutchouc cru dans la presse pour y subir les étapes a) à e) du procédé, les premier et second tronçons de brande étant des tronçons successifs de la bande tubulaire.

17. Procédé selon la revendication 15 ou la revendication 16, **caractérisé en ce que**, la presse (10) comportant des moyens de refroidissement (94) de la portion de bande à l'interface entre un tronçon de bande logé dans la cavité (18) de la presse et un tronçon de bande situé à l'extérieur de la cavité (18) de la presse, le procédé comporte l'étape consistant, durant la vulcanisation du tronçon de bande logé dans la cavité, à utiliser lesdits moyens de refroidissement pour éviter le transfert de chaleur du tronçon de bande logé dans la cavité vers le tronçon de bande situé à l'extérieur de la cavité.

## Claims

1. Vulcanising press (10) for the production of a belt conveyor, **characterised in that** it comprises:
- a fixed cylindrical plate (20) comprising on its exterior a first surface (21) which extends along a main axis A, and has circular transverse cross-sections with a first radius (D);
- a cylindrical mobile plate (22) comprising on its interior a second surface (41) which extends along the said main axis, and has circular transverse cross-sections with a second radius (D') which is larger than the said first diameter, the first and second surfaces delimiting an annular cavity (18) for receipt of a section of belt (19);
- pressurising means (60, 62) which make it possible to displace the said mobile plate in order to apply a predetermined pressure on the sections of belt which is disposed in the interior of the cavity; and
- heating means (55, 56) which make it possible to bring the section of belt disposed in the interior of the cavity up to a predetermined temperature, the said predetermined pressure and the said predetermined temperature being designed for the vulcanisation of the material of the said section of belt, in order to produce a tubular belt.

2. Press according to claim 1, **characterised in that** the mobile plate (22) comprises a strip (40) which is wound around, itself in order to form a tube which surrounds the first surface (21) of the said fixed plate (20), the said strip being able to transmit the pressure which is applied to it by the pressurising means (60, 62) to the section of belt (19) which is disposed in the interior of the cavity (18).

3. Press according to claim 2, **characterised in that** the mobile plate (22) additionally comprises a connection element (48) which is disposed such as to cover the opposite sides (42, 43) of the staid strip (40), the said connection element being able to transmit to the section of belt (19) which is disposed in the interior of the cavity (18) the pressure which is applied to it by the pressurising means (60, 62).

4. Press according to claim 3, **characterised in that** the said connection element (48) is a profile comprising:
- a lower surface (50) in the form of an are of a circle, the centre of which coincides with the main axis (A), and the radius of which is equal to the said second radius (D');
- right (52) and left (53) inclined upper surfaces which form between one another a ridge which is disposed longitudinally on a median vertical plane (P) of the press 10, and with the lower surface (50) of the right and left ridges which are disposed longitudinally.

5. Press according two any one of the preceding claims, **characterised in that** the pressurising means comprise a plurality of chains (60), each chain being disposed such as to surround the mobile plate (22), the ends of each chain being integral with actuating means (62, 70, 72) which can bring the ends towards one another in order to tighten the said chain and apply pressure on the said mobile plate.

6. Press according to claim 5, **characterised in that** the said actuating means comprise a plurality of jacks (62), a first end of a chain (60) being connected to the rod (68) of a jack, and the other end of the same chain (60) being connected to the cylinder (66) of the same jack.

7. Press according to claim 6, **characterised in that** the connection between the rod (68) and an end of the chain (60), or between the cylinder (66) and the other end of the chain (60), is formed by a pivoting arm (70, 72) which is connected on one side to the rod or to the cylinder of the jack, and on the other side to the chain by a claw which can be engaged in a link which constitutes the end of the chain.

8. Press according to any one of the preceding claims, **characterised in that** the said fixed plate (20) comprises in its interior a chamber (36) which can receive the said heating means (55, 56), the outer wall (30) of the fixed plate permitting the exchange of heat between the heating means and the section of belt (19).

9. Press according to claim 8, **characterised in that** the said heating means comprises an electric current generator, electric resistors (55) which are connected to the said generator and circulate in the interior of the chamber (36), and a heat-generating fluid (56) which is contained in the said chamber, and can transfer the heat from the resistors to the outer wall (30) of the fixed plate (20).

10. Press according to any one of the preceding claims, **characterised in that** it comprises supply means which make it possible to displace the tubular belt parallel to its axis which coincides with the main axis (A), in order to produce a continuous belt.

11. Press according to claim 10, **characterised in that** it comprises means (94) for cooling a downstream end of a section of belt adjacent to an upstream end of a section of belt which is accommodated in the cavity.

12. Press according to claim 11, **characterised in that** the cooling means comprise a manifold (94) which is thermally coupled to an upstream portion (90) of the fixed plate (20) and a heat-generating fluid which circulates in the said manifold.

13. Press according to claim 11 or claim 12, **characterised in that** the upstream portion (90) of the fixed plate (20) is conical.

14. Press according to any one of the preceding claims, **characterised in that** it comprise a profile (82) which is disposed longitudinally, and makes it possible to limit the cavity (18) angularly, transversely.

15. Method for use of a vulcanising press for the production of a belt conveyor, **characterised in that**, with the press being a press (10) according to any one of claims 1 to 14, the method comprises the steps consisting of:
a) supplying a section of green rubber belt (19) to the interior of the cavity (18);
b) actuating the pressurising means (60, 62) in order to apply predetermined pressure on the said section of belt, the mobile plate (22) being displace in contact with the section of belt (19) which is accommodated in the interior of the cavity, this section coming into contact with the outer surface (30) of the fixed plate (20);
c) heating the section of belt to a predetermined temperature by means of the heating means (55, 56);
d) vulcanising the rubber of the section of belt in the interior of the cavity, whilst maintaining the said predetermine pressure and the said predetermined temperature for a suitable period of time; and
e) spacing the mobile plate (22) from the fixed plate (20) in order to extract the section of vulcanised belt with a tubular form.

16. Method according to claim 15, **characterised in that** it permits continuous production of a tubular belt for a belt conveyor, by introducing a first, section of green rubber belt into the press in order for it to undergo there the steps a) to e) of the method, then, after having spaced the mobile plate (22) from the fixed plate (20), by translating the tubular belt parallel to its axis by a predetermined length, so as to introduce a second section of green rubber belt into the press in order for it to undergo there the steps a) to e) of the method, the first and second sections or belt being successive sections of the tubular belt.

17. Method according to claim 15 or claim 16, **characterised in that**, with the press (10) comprising means (94) for cooling the portion of belt at the interface between a section of belt which is accommodated in the cavity (18) in the press and a section of belt which is situated on the exterior of the cavity (18) in the press, the method comprises the step, during the vulcanisation of the section of belt which is accommodated in the cavity, consisting of using the said cooling means in order to avoid the transfer of heat from the section of belt which is accommodaTed in the cavity, to the section of belt which is situated on the exterior of the cavity.

## Patentansprüche

1. Vulkanisierpresse (10) für die Herstellung eines Förderbandes, **dadurch gekennzeichnet, dass** sie aufweist:
- eine feste zylindrische Platte (20), die außen eine erste Oberfläche (21) aufweist, die sich entlang einer Hauptachse A erstreckt und transversale kreisförmige Sektionen mit einem ersten Radius (B) hat;
- eine bewegliche zylindrische Platte (22), die innen eine zweite Oberfläche (41) aufweist, die sich entlang der genannten Hauptachse erstreckt und transversale kreisförmige Sektionen mit einem zweiten Radius (D') haut, der größer ist als der genannte erste Durchmesser, wobei die ersten und zweiten Oberflächen einen ringförmigen Hohlraum (18) zur Aufnahme eines Abschnitts eines Bandes (19) begrenzen;
- Druekbeaufschlagungsmittel (60, 62 die es erlauben, die genannte bewegliche Platte so zu bewegen, dass sie einen vorbestimmten Druck auf den im Inneren des Hohlraums angeordneten Abschnitt des Bandes ausübt; und
- Heizmittel (55, 56), die es erlauben, den im Inneren des Hohlraums angeordneten Abschnitt des Bandes auf eine vorbestimmte Temperatur zu bringen, wobei der genannte vorbestimmte Druck und die genannte vorbestimmte Temperatur zur Vulkanisation des Materials des genannten Abschnitts des Bandes angepasst sind, um ein schlauchförmiges Band herzustellen.

2. Presse nach Anspruch 1, **dadurch gekennzeichnet, dass** die bewegliche Platte (22) ein Blatt (40) aufweist, das auf sich selbst zurückgewickelt ist, um ein Rohr zu bilden, dass die erste Oberfläche (21) der genannten festen Platte (20) umgibt, wobei dieses Blatt dazu eingerichtet ist, den Druck, der von den Druckbeaufschlagungsmitteln (60, 62) auf es ausgeübt wird, auf den Abschnitt des Bandes (19) zu Übertragen, der im Inneren des Hohlraums (18) angeordnet ist.

3. Presse nach Anspruch 2, **dadurch gekennzeichnet, dass** die bewegliche Platte (22) außerdern ein Verbindungselement (48) aufeist, das so angeordnet ist, dass es die entgegengesetzten Seiten (42, 43) des genannten Blattes (40) überdeckt, wobei dieses Verbindungselement dazu eingerichtet ist, den Druck, der von den Druckbcaufschlagungsmitteln (60, 62) auf es ausgeübt wird, auf den Abschnitt des Bandes (19) zu übertragen, der im Inneren des Hohlraums (18) angeordnet ist.

4. Presse nach Anspruch 3, **dadurch gekennzeichnet, dass** das genannte Verbindungselement (48) ein Profilelement ist, dass aufweist:
- eine untere Fläche (50), die als Kreisbogen ausgebildet ist, dessen Zentrum mit der Hauptachse (A) zusammenfällt und dessen Radius gleich dem genannten zweiten Radius (D') ist;
- geneigte rechte (52) und linke (53) obere Flächen, die miteinander eine Kante bilden, die in Längsrichtung in einer vertikalen Medianebene (P) der Presse (10) verläuft und die mit der unteren Fläche (50) in Längsrichtung verlaufende rechte und linke Konnten bilden.

5. Presse nach einem der vorstehenden Ansprüche, **dadurch gekennzeichnet, dass** die Druckbeaufschlagungsmittel mehrere Ketten (60) aufweisen, wobei jede Kette so angeordnet ist, dass sie die bewegliche Platte (22) umgibt, die Ende jeder Kette mit Betätigungsmitteln (62, 70, 72) verbunden sind, die dazu eingerichtet sind, sich einander anzunähern, um die genannte Kette zu spannen und einen Druck auf die genannte bewegliche Platte auszuüben.

6. Presse nach Anspruch 5, **dadurch gekennzeichnet, dass** die genannten Betätigungsmittel mehrere Zylinder (62) aufweisen, wobei ein erstes Ende einer Kette (60) mit der Kolbenstange (68) eines Zylinders verbunden ist und das andere Ende derselben Kette (60) mit dem Zylinderkörper (66) desselben Zylinders verbunden ist.

7. Presse nach Anspruch 6, **dadurch gekennzeichnet, dass** die Verbindung zwischen der Kolbenstange (68) und einem Ende der Kette (60) oder zwischen dem Zylinderkörper (66) und dem anderen Ende der Kette (60) durch einen schwenkbaren Arm (70, 72) gebildet wird, der einerseits mit der Kolbenstange oder dem Zylinderkörper des Zylinders verbunden ist und andererseits durch eine Klaue, die dazu eingerichtet ist, in ein das Ende der Kette bildendes Kettenglied einzugreifen, mit der Kette verbunden ist.

8. Presse nach einem der vorstehenden Ansprüche, **dadurch gekennzeichnet, dass** die genannte feste Platte (20) im Inneren eine Kammer (36) aufweist, die dazu eingerichtet ist, die genannten Heizmittel (55, 56) aufzunehmen, wobei die äußere Wand (30) der festen Platte den Austausch von Wärme zwischen den Heizmitteln und dem Abschnitt des Bandes (19) erlaubt.

9. Presse nach Anspruch 8, **dadurch gekennzeichnet, dass** die genannten Heizmittel eine elektrische Stromquelle, elektrische Widerstände (55), die mit der genannten Stromquelle verbunden sind und im Inneren der Kammer (36) umlaufen, und ein Wärmeübertragungsfluid (56) aufweisen, das in der genannten Kammer enthalten ist und in der Lage ist, die Wärme der Widerstände auf die äußere Wand (30) der festen Platte (20) zu übertragen.

10. Presse nach einem der vorstehenden Ansprüche, **dadurch gekennzeichnet, dass** sie Antriebsmittel aufweist, die es erlauben, das rohrförmige Band parallel zu seiner Achse, die mit der genannten Hauptachse (A) zusammenfällt, zu bewegen, um ein fortlaufendes Band zu produzieren.

11. Presse nach Anspruch 10, **dadurch gekennzeichnet, dass** sie Kühlmittel (94) aufweist, zum Kühlen eines stromabwärtigen Endes eines Abschnitts des Bandes, der sich an ein stromaufwärtiges Ende eines in dem Hohhaum aufgenommenen Abschnitts des Bandes anschließt.

12. Presse nach Anspruch 11, **dadurch gekennzeichnet, dass** die Kühlmittel eine Leitung (94), die mit einem stromaufwärtigen Teil (90) der festen Platte (20) in thermischem Kontakt steht, und ein in dieser Leitung zirkulierendes Wärmeübertragungsfluid aufweisen.

13. Presse nach Anspruch 11 oder nach Anspruch 12, **dadurch gekennzeichnet, dass** der stromaufwärtige Teil (90) der festen Platte (20) konisch ist.

14. Presse nach einem der vorstehenden Ansprüche, **dadurch gekennzeichnet, dass** sie ein Profilelement (82) aufweist, das in Längsrichtung angeordnet ist und es erlaubt, den Hohlraum (18) in Transversalrichtung winklig zu begrenzen.

15. Verfahren zur Verwendung einer Vulkanisierpresse für die Herstellung eines Förderbandes, **dadurch gekennzeichnet, dass** die Presse eine Presse (10) nach einem der Ansprüche 1 bis 14 ist und das Verfahren die Schritte aufweist, die bestehen in:
a) Transportieren eines Abschnitts eines Bandes (19) aus Rohkautschuk im Inneren des Hohlraums (18);
b) Betätigen der Druckbeaufschlagungsmittel (60, 62), um einen vorbestimmten Druck auf den genannten Abschnitt des Bandes auszuüben, wobei die bewegliche Platte (22) mit dem im Inneren des Hohlraums aufgenommenen Abschnitt des Bandes (19) in Kontakt gebracht wird und dieses Band mit der äußeren Oberfläche (30) der festen Platte (20) in Kontakt kommt;
c) Erhitzen des Abschnitts des Bandes auf eine vorbestimmte Temperatur mit Hilfe der Heizmittel (55, 56);
d) Vulkanisieren des Kautschuks des Abschnitts des Bandes im Inneren des Hohlraums unter Aufrechterhaltung des genannten vorbestimmten Druckes und der genannten vorbestimmten Temperatur während einer geeignet gewählten Zeitdauer; und
e) Lösen der beweglichen Platte (22) von der festen Platte (20), um den vulkanisierten schlauchförmigen Abschnitt des Bandes zu entnehmen.

16. Verfahren nach Anspruch 15, **dadurch gekennzeichnet, dass** es die kontinuierliche Herstellung eines schlauchförmigen Bandes für einen Bandförderer erlaubt, indem ein erster Abschnitt des Bandes aus Rohkautschuk in die Presse eingeführt wird, um dort den Schritten a) bis e) des Verfahrens unterzogen zu werden, dann, nachdem die bewegliche Platte (22) von der festen Platte (20) gelöst worden ist, das schlauchförmige Band parallel zu seiner Achse über eine vorbestimmte Länge transportiert wird, so dass ein zweiter Abschnitt des Bandes aus Rohkautschuk in die Presse eingeführt wird, um dort den Schritten a) bis e) des Verfahrens unterzogen zu werden, wobei die ersten und zweiten Abschnitte des Bandes aufeinanderfolgende Abschnitte des schlauchförmigen Bandes sind.

17. Verfahren, nach Anspruch 15 oder Anspruch 16, **dadurch gekennzeichnet, dass** die Presse (10) Kühlmittel (94) aufweist, zum Kühlen des Abschnitts des Bandes an der Schnittstelle zwischen einem Abschnitt des Bandes, der in dem Hohlraum (18) der Presse aufgenommen ist, und einem Abschnitt des Bandes, der sich außerhalb des Hohlraums (18) der Presse befindet, wobei das Verfahren einen Schritt aufweist, der darin besteht, dass während der Vulkanisation des in dem Hohlraum aufgenommenen Abschnitts des Bandes die genannten Kühlmittel dazu benutzt werden, die Übertragung von Wärme von dem in dem Hohlraum aufgenommenen Abschnitt des Bandes auf den außerhalb des Hohlraums liegenden Abschnitt des Bandes zu verhindern.
